# EUROPEAN PATENT APPLICATION

(11) **EP 1 611 788 A1**
(43) Date of publication of application: **04.01.2006**
(21) Application number: 03816550.2
(22) Date of filing: 19.09.2003
(51) Int. Cl.: A01M 1/00, A01M 17/00, A01G 7/00, A01B 79/00

(54) **SOIL PROCESSING METHOD**

(30) Priority: 28.03.2003 JP 2003092909
(71) Applicant: Celltec Project Management Co., Ltd., Tokyo 164-0003 (JP)
(72) Inventor: TANIWAKI, Ken, Tsukuba-shi, Ibaraki 305-0023 (JP); KOBAYASHI, Yuichi, Tsukuba-shi, Ibaraki 305-0032 (JP); IIJIMA, Wataru, Tsukuba-shi, Ibaraki 305-0821 (JP); YAMASHITA, Masateru, Heights Kubota 203, Kawasaki-shi, Kanagawa 214-0021 (JP); ODANI, Hajime, Nakano-ku, Tokyo 164-0003 (JP)
(74) Representative: Kilian, Helmut
(86) International application number: PCT/JP2003/011953
(87) International publication number: WO 2004/086860

(57) **Abstract**

In a soil processing method of the present invention, a microwave radiator is made to move into soil, and microwaves are thereafter radiated from the microwave radiator to soil to be processed. As a method for making the microwave radiator move into soil, a method in which an underground mover incorporating the microwave radiator is made to move underground while making a cultivator move underground by means of a underground-moving claw mechanism similar to a chisel or subsoiler, a method in which the microwave radiator is vertically thrust into and drawn out from soil by a power arm, or a method in which the microwave radiator is vertically thrust into and drawn out from soil by using one of various vertical excavation devices may be used.

According to the present invention, the influence of microwaves on soil in a deep region not easily influenced by microwave radiation to a farm surface can be effectively improved to ensure that various functions useful in agriculture, e.g., the function of adjusting the growth of a plant, the function of adjusting germination time, the function of sterilizing soil and the function of remedying soil can be expected.

## Description

### Technical Field

The present invention relates to an agricultural soil processing method used for the purpose of, for example, exterminating nematodes in a farm, adjusting the growth of a plant, adjusting germination time and remedying soil and, more particularly, to a soil processing method using microwaves.

### Background Art

For sterilization of bed soil for vegetables and flower plants, sterilization of seedling beds for green vegetables and sterilization of soil for vegetables in hothouses, "methyl bromide", which is a low-priced chemical usable in a simple way and highly effective, has been widely used. However, a mutual agreement on imposition of limitations on use of "methyl bromide" was reached in "the Montreal Protocol on Substances that Deplete the Ozone Layer" adopted by the countries that concluded the 1987 Vienna Convention. After making of several revisions of the protocol, a decision was made on January 1, 2005 to thoroughly prohibit use of methyl bromide.

Under the circumstances, attempts have been made to develop soil sterilization techniques which can replace the technique using methyl bromide. Typical examples of such techniques are solar heat sterilization, hot water sterilization and fumigation sterilization. There are still problems in terms of effectiveness, economy and workability with each of such techniques, and it cannot be said that an effective alternative idea has been established. The time limit before the beginning of the year 2005 is little short of two years and there is an urgent need to establish an effective technique.

Sterilization, insecticide and weeding using microwaves were once tried in Europe. However, no steady techniques for them are presently recognized. Incidentally, conventional civil engineering techniques of breaking base rock or ground by heating and expanding contained water by using an induction heating effect by radiating microwaves are known (see, for example, Japanese Patent Laid-Open No. 07-91181).

A condition for preventing the influence of a nematode in soil on a plant set in a farm (growth retardation due to repeated cultivation) by heat sterilization on the soil is that the temperature of soil exiting in the range from the soil surface to a depth of about 40 cm corresponding to the depth of planting of ordinary plants in a farm (e.g., root vegetables or the like) is maintained at a point higher than a predetermined temperature (e.g., 60C°) at least for several minutes.

In a case where such a temperature condition for heat sterilization is realized by hot water spraying in a farm, much expense in time and effort and a high cost are required for various kinds of work including supplying a large amount of hot water, spraying the hot water, covering the soil with a thermal insulation sheet after spraying and repeating these kinds of work. Also, the temperature of hot water drops abruptly at the time of permeation into the soil. A long time period (e.g., about one week) is therefore required to completely kill or make harmless the nematode at a target depth in the soil.

The inventors of the present invention made an attempt to achieve the above-described temperature condition by microwave radiation to a farm. The inventors obtained a finding that when microwaves are vertically radiated to the soil surface of the farm from above, the effective range of radiation in the depth direction below the soil surface is at most about 10 cm and the above-described temperature condition cannot be achieved at the target depth (e.g., about 40 cm below the soil surface).

Moreover, it seems that the microwave in-soil penetration depth is not largely changed even when the microwave transmission output is increased. In actuality, a finding was also obtained that the temperature reached in soil in a comparatively shallow region (e.g., a depth region of about 10 cm from the soil surface) is increased with the increase in transmission output but the target temperature cannot be easily reached with respect to a deeper depth region by increasing the transmission output.

The present invention has been achieved on the basis of the above-described findings, and an object of the present invention is to provide a soil processing method which enables microwaves to effectively influence soil in a deep region where soil is not easily influenced by ordinary microwave radiation to the farm surface, and which thereby ensures that various functions useful in agriculture, e.g., the function of adjusting the growth of a plant, the function of adjusting germination time, the function of sterilizing soil and the function of remedying soil can be expected.

A more concrete object of the present invention is to provide a soil sterilization method and apparatus which are capable of reliably exterminating in a short time nematodes contained in soil in a plant setting depth region in a farm, and which are advantageous in terms of economy and workability.

Other objects, functions and effects of the present invention will be easily understood by those skilled in the art from the following description of the specification.

### Disclosure of the Invention

In a soil processing method of the present invention, a microwave radiator is made to move into soil, and microwaves are thereafter radiated from the microwave radiator to soil to be processed. As a method for making the microwave radiator move into soil, any of various methods including a method in which the microwave radiator is made to move underground while making a cultivator move underground by means of a underground-moving claw mechanism similar to a chisel or subsoiler, a method in which the microwave radiator is vertically thrust into and drawn out from soil by a power arm, a method in which the microwave radiator is vertically thrust into and drawn out from soil by using one of various vertical excavation devices, and a method in which the microwave radiator is incorporated in a manual working instrument such as shovel or a hoe and made by man power to move into soil may be used. On the other hand, microwave radiation may be performed while the microwave radiator made to move into soil is being maintained at rest or may be performed while the microwave radiator is being moved in a substantially vertical direction or in a substantially horizontal direction. If microwave radiation is performed while the microwave radiator is being at rest, a large amount of microwaves can be radiated to a particular soil point (e.g., a plat setting point) at low power consumption. If microwave radiation is performed while the microwave radiator is moving, microwaves can be continuously radiated to a soil line along the locus of the movement (e.g., a plat setting line in the case of horizontal movement, or an entire-depth range at a particular spot in the case of vertical movement).

In a soil sterilization method according to an embodiment of the present invention, microwaves are radiated underground from the microwave radiator traveling at a predetermined depth under the ground so that soil to be sterilized is sterilized along the locus of travel of the microwave radiator. That is, microwaves are not radiated from right above the surface of the farm. Instead, the microwave radiator itself is made to move underground and microwaves are radiated underground at a freely-selected angle from the underground movement depth point.

According to this arrangement, the microwave radiator itself is positioned underground to radiate microwaves having a sufficiently high intensity even to soil at a depth at which the soil cannot be sufficiently irradiated with microwaves by vertical radiation to the farm soil surface, and the temperature of the soil to be sterilized is reliably increased to the necessary sterilization temperature by the induction heating effect. By this effect or by the influence of direct microwave radiation to microorganisms, the microorganisms (nematodes or the like) to be sterilized can be killed or made harmless.

In this case, if the center axis of radiation of microwaves radiated underground from the microwave radiator is set in a substantially horizontal direction, only the soil in a layer in a predetermined depth range is increased in temperature by induction heating, thus making it possible to kill or make harmless the microorganisms e.g., nematodes living in the certain depth range in the soil.

Also, if the microwave radiator is made to travel underground two times or more along one travel locus at different depths, soil layers heated by the rounds of heating are superposed to heat the whole of a continuous mass of soil through a predetermined depth from the soil surface. Thus, the soil in the plant setting depth range can be uniformly sterilized.

Also, if a plurality of microwave radiators are arranged at a suitable distance from each other in a direction perpendicular to the direction of travel, the soil to be sterilized can be sterilized in a belt zone through a predetermined width along the soil surface with the travel of the plurality of microwave radiators.

Further, if an adjacent pair of microwave radiators in the plurality of microwave radiators are placed so that their radiation surfaces face each other, superimposed electric fields of microwaves are formed between the pair of microwave generators to sterilize the soil more strongly.

In implementation of the method of the present invention, a fertilizer comprising salts (e.g., a chemical fertilizer or the like containing nitrogen, phosphorous and potassium) may be mixed in the soil to be sterilized, before microwave radiation. The complex dielectric constant of the soil is thereby increased correspondingly to improve the efficiency of heating by microwave radiation. If heating sterilization is performed on nematodes in the soil, it is preferable to set to 60C° or higher the target temperature to which the temperature of soil shouldbe increased. Further, if the plant to be set is a root vegetable, it is preferable to set the depth range in which the temperature of soil is to be increased within a range of about 40 cm from the soil surface.

A soil sterilization apparatus of the present invention includes a farm traveling unit having an underground traveling portion and an overground traveling portion, a microwave radiator incorporated in the underground traveling portion of the farm traveling unit, a microwave generation source held in the overground traveling portion of the farm traveling unit, and a waveguide connecting the microwave generation source held in the overground traveling portion and the microwave radiator held in the underground traveling portion. The "underground traveling portion" is a portion having the function of traveling at a generally constant depth by moving into the soil. The concept of the underground moving portion of a farming instrument such as a chisel or subsoiler can be said to be similar to this.

In this arrangement, the microwave transmitter is incorporated in the underground traveling portion and travels underground, and microwaves generated from the microwave generation source (e.g., a magnetron) held in the overground traveling portion are guided to the microwave transmitter under the ground by the waveguide. Therefore, if the microwave transmitter itself is positioned underground, it can radiate microwaves having a sufficiently high intensity even to soil at a depth at which the soil cannot be sufficiently irradiated with microwaves by vertical radiation to the farm soil surface, and the temperature of the soil to be sterilized can be reliably increased to the necessary sterilization temperature by the induction heating effect, thereby killing or making harmless the microorganisms (nematodes or the like) to be sterilized. Moreover, there is no cooling problem or the like, since the microwave generation source is positioned overground.

In this case, if the farm traveling unit has a plurality of underground traveling portions placed at a suitable distance from each other in a direction perpendicular to the direction of travel, and if the microwave radiator is incorporated in each underground traveling portion, the soil to be sterilized can be sterilized by induction heating in a belt zone through a predetermined width along the soil surface with the travel of the plurality of microwave radiators. In this way, the farm can be sterilized in a belt zone through a width selected as desired.

Also, if the radiation center axis of the microwave radiator is directed in a substantially horizontal direction in a direction perpendicular to the direction of travel, only the soil in a layer in a predetermined depth range is increased in temperature by induction heating, thus making it possible to kill or make harmless microorganisms e.g., nematodes living in the certain depth range in the soil.

Also, if the microwave radiators held in each adjacent pair of the underground moving portions face each other, superimposed electric fields of microwaves are formed between the two microwave generators to sterilize the soil more strongly.

Also, if an underground movement depth adjustment tool for adjusting the underground movement depth of the underground traveling portions is provided, the underground movement depth can be freely changed to selectively sterilize soil at a desired depth. If sterilization by being divided into two or three rounds of sterilization through different depths on one farm, it is possible to continuously sterilize a continuous mass of soil between the soil surface and a predetermined depth by digging the farm deeper.

Also, if a shielding member for preventing microwaves transmitted from the microwave transmitter held in the underground traveling portion from leaking overground is provided, it is possible to avoid a risk of the operator being accidentally exposed to the microwaves.

The above-described farm traveling unit may be provided as a pulled type or a self-propelled type. If the farm traveling unit is provided as a pulled type, it may be pulled by being attached to a rear portion of a cultivator for example. If the farm traveling unit is provided as a self-propelled type, it may be attached to a midship-mount-type farming machine.

In a possible situation where root vegetables are grown in a hothouse or the like, it is inconvenient to make a large working machine such as a tractor travels in a hothouse. In such a situation, if a plant setting position is known, concentrated sterilization for locally sterilizing only the corresponding portion in the depth direction may suffice. In such a case, there is a need for a farming instrument applied to a soil processing method in which a microwave radiator is made to move into soil generally in a vertical direction and thereafter radiate microwaves from the microwave radiator to the soil to be processed.

A farming instrument used for such a purpose has a main body capable of being generally vertically thrust into soil. The main body has a sharpened portion for thrusting provided on its fore end portion, a microwave radiation port provided in its side surface, and a microwave inlet provided in its rear end portion. A waveguide for guiding microwaves from the microwave inlet to the microwave transmission port is incorporated in the main body.

The thus-constructed farming instrument is thrust into a desired spot in a farm by any of various methods including a method in which the instrument is vertically thrust into and drawn out from soil by a small power arm, a method in which the instrument is vertically thrust into and drawn out of soil by using one of various vertical excavation apparatuses while vibrating the instrument if necessary, and a method in which the instrument is incorporated in a manual working instrument such as shovel or a hoe and made by man power to move into soil. The instrument then radiates microwaves to soil through a predetermined depth.

### Brief Description of the Drawings

Figure 1 is a schematic sectional side view of an apparatus of the present invention in a state of being used;
Figure 2 is a schematic plan view of the apparatus of the present invention;
Figure 3 is a schematic front view of the apparatus of the present invention;
Figure 4 is a sectional plan view of the apparatus of the present invention, mainly showing the placement of microwave transmitters;
Figure 5 is a diagram showing the construction of an example of a waveguide with a microwave transmitter;
Figure 6 is a perspective view of the waveguide with a microwave transmitter;
Figure 7 is a sectional side view for explaining the operation of the apparatus of the present invention;
Figure 8 is a front view for explaining the operation of the apparatus of the present invention;
Figure 9 is a diagram showing the results of a computer simulation of a heating energy distribution between microwave transmitters facing each other;
Figure 10 is a graph showing comparison between the microwave soil sterilization method and a hot-water soil sterilization method with respect to economy;
Figure 11 is a diagram showing the state of a farm after microwave radiation;
Figure 12 is a diagram showing the relationship between the farm after microwave radiation and root plant setting positions;
Figure 13 is a diagram showing another example of the apparatus of the present invention; and
Figure 14 is a diagram showing the operation in the another example of the apparatus of the present invention.

### Best Mode for Carrying Out the Invention

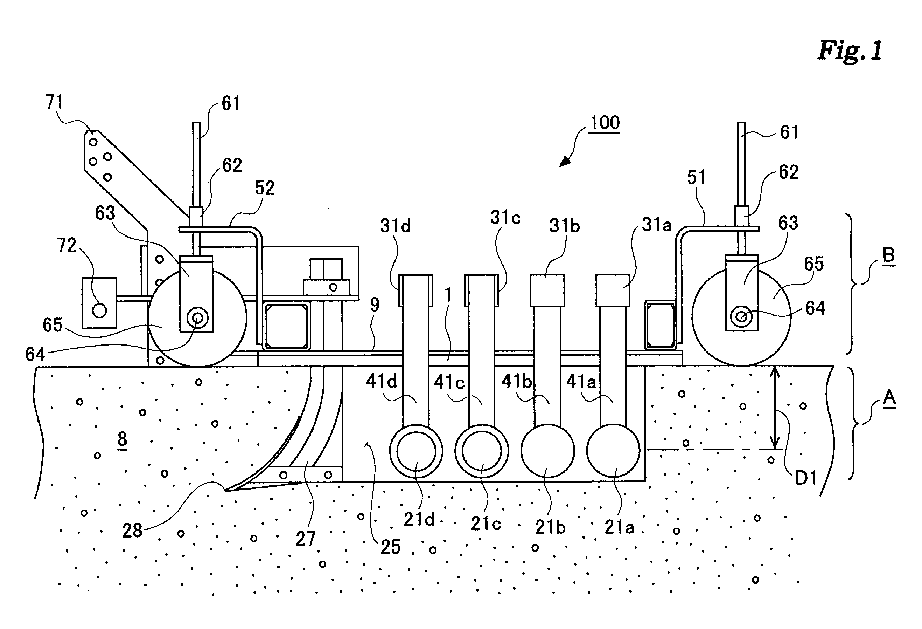

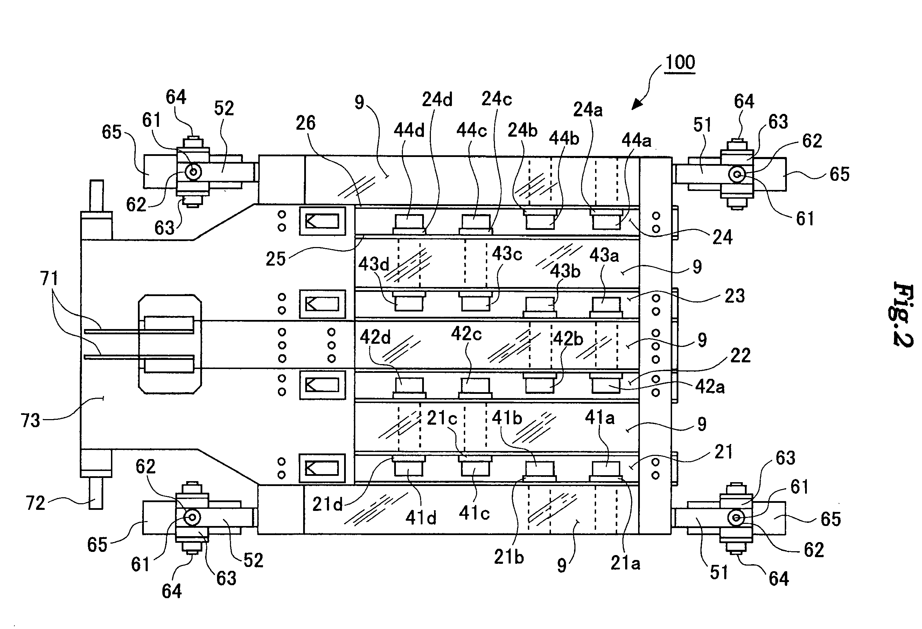

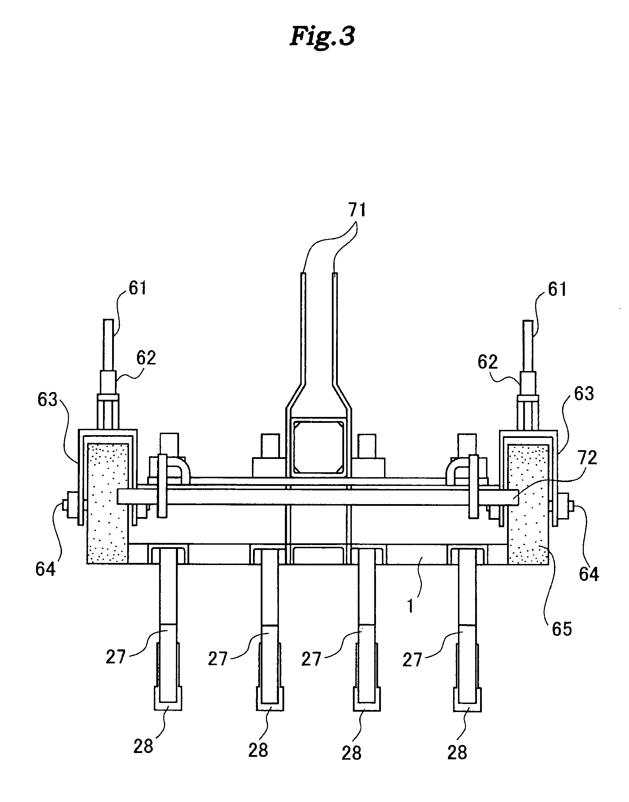

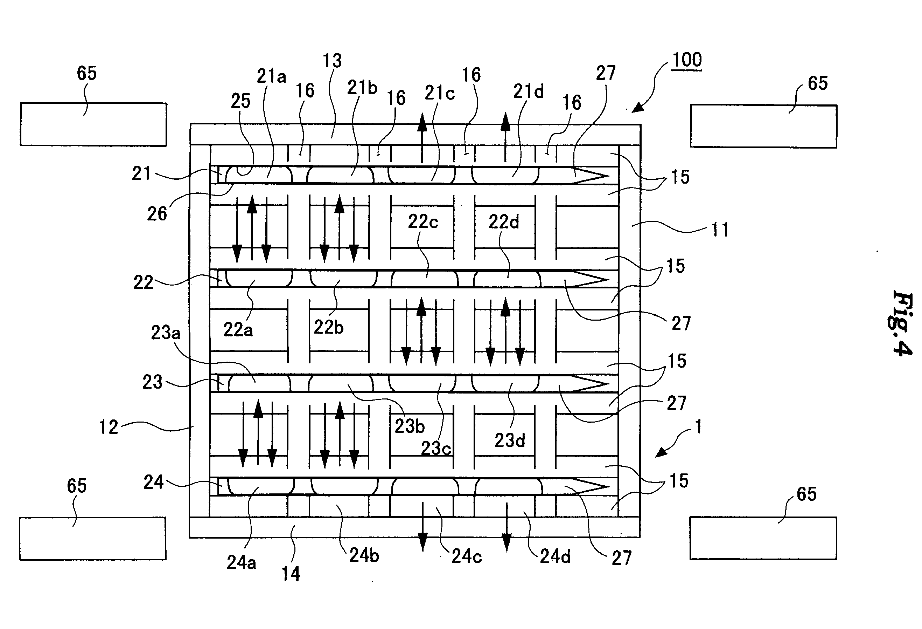

A preferred embodiment of a soil sterilization method and a soil sterilization apparatus for carrying out the method in accordance with the present invention will be described in detail with reference to the accompanying drawings. Figure 1 is a schematic sectional side view of the apparatus of the present invention in a state of being used; Figure 2 is a schematic plan view of the apparatus of the present invention; Figure 3 is a schematic front view of the apparatus of the present invention; and Figure 4 is a sectional plan view of the apparatus of the present invention, showing the placement of microwave transmitters.

As shown in Figure 1, a farm traveling unit 100 according to the present invention has an underground traveling portion A and an overground traveling portion B. In the underground traveling portion A, microwave transmitters 21a to 21d are incorporated and held. In the overground traveling portion B, magnetrons 31a to 31d, which are microwave generation sources, are held. The magnetrons 31a to 31d held in the overground traveling portion B and the microwave transmitters 21a to 21d held in the underground traveling portion A are connected to each other by waveguides 41a to 41d. Therefore, while the microwave transmitters 21a to 21d incorporated and held in the underground traveling portion A are traveling underground, microwaves generated from the magnetrons 31a to 31d held in the overground traveling portion B are guided to the underground microwave generators 21a to 21d by the waveguides 41a to 41d. Thus, the microwave transmitters 21a to 21d themselves are positioned underground to radiate microwaves having a sufficiently high intensity even to soil 8 in a deep layer which cannot be sufficiently irradiated with microwaves in the case of vertical radiation to a farm soil surface, so that the temperature of soil to be sterilized is reliably increased to a necessary sterilization temperature by the induction heating effect to kill or make harmless microorganisms (nematodes or the like), which are a sterilization target.

Description will be made of this in more detail. As shown in Figure 4, the farm traveling unit 100 has a base frame 1 as a main component. The base frame 1 is integrally formed by assembling eight longitudinal ribs 15 and four lateral ribs 16 in a rectangular frame formed by a front support bar 11, a rear support bar 12, left side support bar 13 and a right side support bar 14.

Four underground movers 21, 22, 23, and 24 are attached to the base frame 1 so as to face vertically downward. Each of the underground movers 21, 22, 23, and 24 is formed by integrally combining left and right side wall plates 25 and 26 each made of steel plate and opposed to each other through a spacer not shown in the drawings. A space between the left and right side wall plates 25 and 26 is open through the entire height of the walls and is closed at the front end by a head metal (see Figure 1) 27 described below. As shown in Figure 1, a claw 28 having a downwardly descending tapered surface for moving into the ground is provided on the front end of the head metal 27. As the farm traveling unit 100 travels forward, the underground movers 21, 22, 23, and 24 moves under the ground while being guided by the claw 28 provided on the front end of the head metal 27. With this movement, microwave transmitters 21a to 21d, 22a to 22d, 23a to 23d, and 24a to 24d also move under the ground while being protected by the underground movers. Figure 1 shows a state in which the farm traveling unit 100 shown in Figure 2 is seen from the left-hand side, with the left side wall plate 26 removed.

As shown in Figure 4, the two microwave transmitters 21a and 21b mounted in rear positions in the direction of travel in the four microwave transmitters 21a to 21d accommodated in a lower portion of the underground mover 21 in a state of being arranged in a horizontal row are mounted so as to face horizontally and rightward with respect to the direction of travel, while the two microwave transmitters 21c and 21d mounted in front positions in the direction of travel are mounted so as to face horizontally and leftward with respect to the direction of travel. Similarly, the two microwave transmitters 22a and 22b mounted in rear positions in the direction of travel in the four microwave transmitters 22a to 22d accommodated in a lower portion of the underground mover 22 in a state of being arranged in a horizontal row are mounted so as to face horizontally and leftward with respect to the direction of travel, while the two microwave transmitters 22c and 22d mounted in front positions in the direction of travel are mounted so as to face horizontally and rightward with respect to the direction of travel. Similarly, the two microwave transmitters 23a and 23b mounted in rear positions in the direction of travel in the four microwave transmitters 23a to 23d accommodated in a lower portion of the underground mover 23 in a state of being arranged in a horizontal row are mounted so as to face horizontally and rightward with respect to the direction of travel, while the two microwave transmitters 23c and 23d mounted in front positions in the direction of travel are mounted so as to face horizontally and leftward with respect to the direction of travel. Similarly, the two microwave transmitters 24a and 24b mounted in rear positions in the direction of travel in the four microwave transmitters 24a to 24d accommodated in a lower portion of the underground mover 24 in a state of being arranged in a horizontal row are mounted so as to face horizontally and leftward with respect to the direction of travel, while the two microwave transmitters 24c and 24d mounted in front positions in the direction of travel are mounted so as to face horizontally and rightward with respect to the direction of travel.

Accordingly, as is apparent from Figure 4, the two microwave transmitters 21a and 21b provided in the underground mover 21 and the two microwave transmitters 22a and 22b provided in the adjacent underground mover 22 are placed so as to face each other, and superimposed electric fields of microwaves are formed between these microwave transmitters, as indicated by arrows in the figure. Similarly, the two microwave transmitters 22c and 22d provided in the underground mover 22 and the two microwave transmitters 23c and 23d provided in the adjacent underground mover 23 are placed so as to face each other, and superimposed electric fields of microwaves are formed between these microwave transmitters, as indicated by arrows in the figure. Similarly, the two microwave transmitters 23a and 23b provided in the underground mover 23 and the two microwave transmitters 24a and 24b provided in the adjacent underground mover 24 are placed so as to face each other, and superimposed electric fields of microwaves are formed between these microwave transmitters, as indicated by arrows in the figure. Consequently, as the farm traveling unit 100. travels, strong microwaves are radiated to soil between the four underground movers 21 to 24 to heat the soil 8 by the induction heating effect.

Referring again to Figure 1, the magnetrons (e.g., 2.45 GHz) 31a to 31d, which are microwave generation sources, are supported and fixed on upper portions of the waveguides 41a to 41d by a supporting mechanism not shown in the drawings, and cooling blowers not shown in the drawings are provided for the magnetrons. That is, as shown in Figure 2, four groups of waveguides 41a to 41d, 42a to 42d, 43a to 43d, and 44a to 44d connected to the microwave radiators are respectively vertically accommodated in the four underground movers 21 to 24, and the magnetrons are provided on upper end portions of the waveguides. Therefore, microwaves generated by the magnetrons travel through the waveguides to reach the microwave transmitters, and are radiated to soil under the ground while the direction of travel of the microwaves is changed to the horizontal and rightward or leftward direction at each microwave radiator. The left and right side wall plates 25 and 26 constituting the underground movers 21 to 24 have circular openings formed in correspondence with the radiation ports of the microwave radiators. The circular openings are not shown in the drawings. Microwaves are radiated under the ground through these circular openings. The openings for microwave radiation are closed by blank plates made of Teflon in order to prevent any foreign material such as mud from entering the microwave radiators. The blank plates are not shown in the drawings.

Microwaves thus radiated to soil under the ground are provided for heating soil. However, the left and right side surfaces of the underground movers 21 to 24 and soil in contact with the left and right side surfaces do not tightly contact with each other and there is, therefore, a possibility of the microwaves being leaked overground through the gaps between the side surface and the soil. Therefore, as shown in Figure 2, the space between each adjacent pair of the underground movers 21 to 24 is closed with a shielding plate 9 formed of a steel plate or the like, thereby preventing a risk of an operator being accidentally exposed to leaking microwaves during soil sterilization operation.

Referring again to Figure 1, a bracket 51 is provided on a rear portion of the base frame 1, and a pair of left and right ruling wheels 65, 65 are supported on the bracket 51 (see Figure 2). That is, referring to the figure, reference numeral 64 denotes a shaft of the ruling wheel; reference numeral 63 a forked yoke for supporting the shaft of the ruling wheel; reference numeral 61 a supporting rod fixed to the yoke 63; and reference numeral 62 a stopper for adjusting the length of the supporting rod 61. The projecting length of the supporting rod 61 is changed by shifting the position of the stopper 62 upward or downward to adj ust the height of the ruling wheel 65 (i.e., underground movement depth D1) as desired. Similarly, a bracket 52 is also provided on a front portion of the base frame 1, and a pair of left and right ruling wheels 65 are also supported on the bracket 52 (see Figure 2). That is, referring to the figure, reference numeral 64 denotes a shaft of the ruling wheel; reference numeral 63 a forked yoke for supporting the shaft of the ruling wheel; reference numeral 61 a supporting rod fixed to the yoke 63; and reference numeral 62 a stopper for adjusting the length of the supporting rod 61. The projecting length of the supporting rod 61 is changed by shifting the position of the stopper 62 upward or downward to adjust the height of the ruling wheel 65 (i.e., underground movement depth D1) as desired.

Further, as shown in Figure 2, a front base plate 73 is integrally fixed to a front end portion of the base frame 1. A pull member 71 and a pull rod 72 used in traction operation are attached to the front base plate 73.

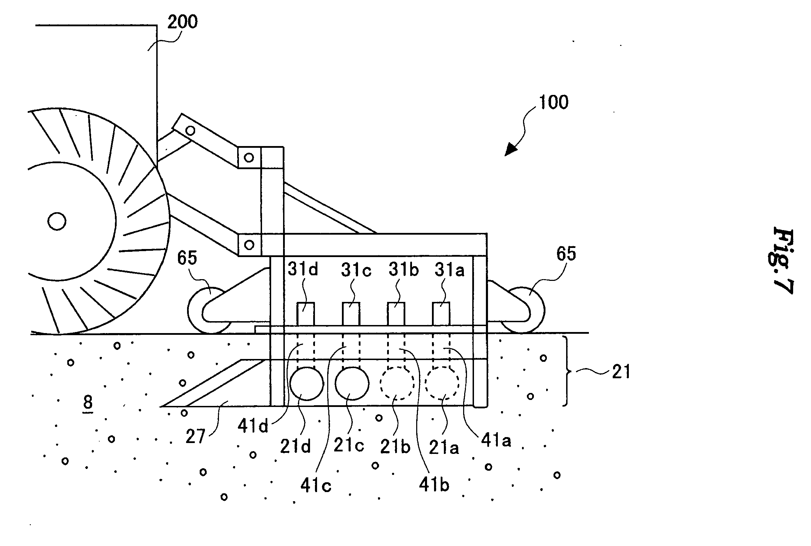

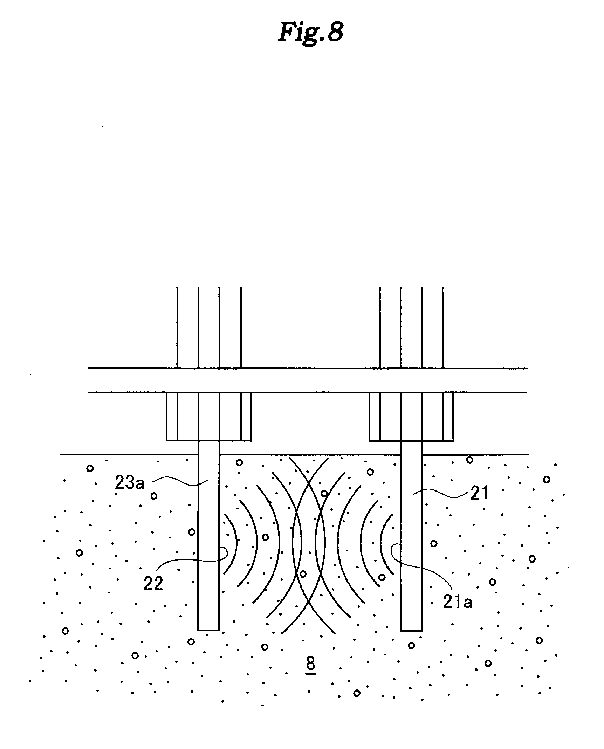

Figures 7 and 8 show a side view and front view for explaining the operation of the apparatus of the present invention. The soil sterilization method using the apparatus of the present invention will be described in detail with reference to the figures.

When the farm traveling unit 100 is used, it is first pulled by being attached to a rear portion of a cultivator 200 as shown in Figure 7. At this time, the underground movement depth D1 of the underground movers 21 to 24 (see Figure 1) is set to a suitable value by adjusting the height of the ruling wheels 65. In the case of a farm where planting of root vegetables is scheduled to be performed, soil existing in a depth range of 40 cm from the soil surface is sterilized. In this case, if sterilization is performed by being divided into two processes: a first process in which sterilization is performed through a depth range between a depth of 40 cm and a depth of 20 cm (or a depth range between a depth of 20 cm and the soil surface) and a second process in which sterilization is performed through a depth range between a depth of 20 cm and the soil surface (or a depth range between a depth of 40 cm and a depth of 20 cm), the height of the ruling wheels 65 is set by being adjusted to the corresponding depth D1. Subsequently, a fertilizer, which is constituted by salts (e.g., a chemical fertilizer containing nitrogen, phosphorous and potassium), is mixed before soil sterilization in order to increase the complex dielectric constant of the soil to be processed in a scheduled-sterilization region of the farm. Mixing of the fertilizer may be performed simultaneously with the cultivation work. Thereafter, the farm traveling unit 100 is pulled by the cultivator 200 to travel through a scheduled-sterilization region of the farm. After the completion of the first round of travel, the second round of travel is made by changing the height of the ruling wheels 65. During each round of travel, the soil existing in the regions interposed between the underground movers 21 to 24 is heated and increased in temperature by the induction heating effect of microwave radiation from the two sides in the horizontal direction, as shown in Figure 8. At this time, if the microwave power and the speed of travel of the farm traveling unit are suitably set, the temperature of the soil to be sterilized becomes 60C° or higher and this state is maintained for at least several minutes, thus reliably killing or making harmless the target nematode through the entire width of the farm traveling unit 100 and through the scheduled depth (about 40 cm from the soil surface).

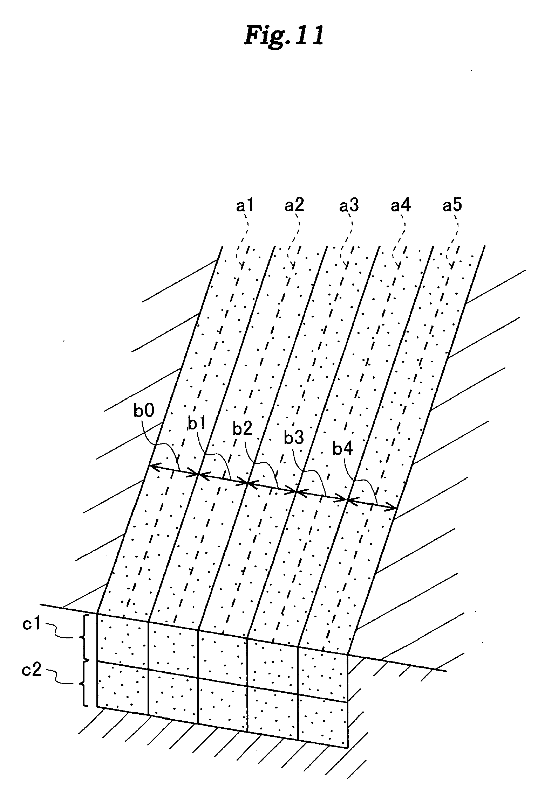

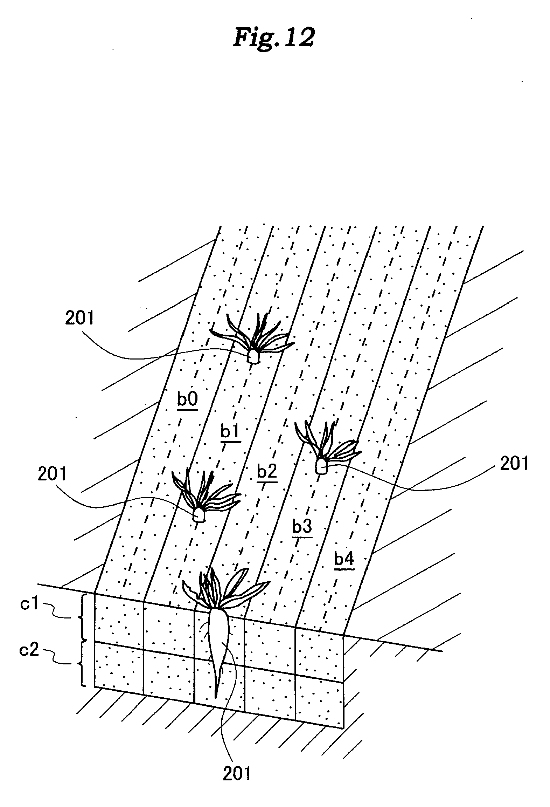

Figures 11 and 12 show the state of the farmthus sterilized. In a case where there are a plurality of scheduled plant setting lines a1 to a5 in the farm as shown in Figure 11, microwave soil sterilization is performed by being divided into to two rounds of sterilization each performed on the scheduled planting lines a1 to a5 at a time through a depth range of, for example, 40 cm from the soil surface. After this sterilization, therefore, root vegetables 201 can grow without being harmed by the nematode in sterilization regions b0 to b4 and in ranges c1 and c2 irrespective of in which of the lines a1 to a5 the vegetables are planted, as shown in Figure 12. Referring to Figure 12, the region b0 is a region outside the underground mover 21; the region b1 is a region interposed between the underground movers 21 and 22; the region b2 is a region interposed between the underground movers 22 and 23; the region b3 is a region interposed between the underground movers 23 and 24; and the region b4 is a region outside the underground mover 24. Also, c1 denotes a layer sterilized by the first round of sterilization, and c2 denotes a layer sterilized by the second round of sterilization.

While in the above-described embodiment the farm traveling unit of the present invention is constructed as a pulled-type, it can, of course, be constructed as a self-propelled type of unit attached to a midship-mount-type farming machine for example.

In the above-described embodiment, the underground movers are arranged in four rows in the farm traveling unit and the microwave radiators are respectively incorporated in the underground movers. However, the arrangement of the underground movers and the number and direction of the microwave radiators incorporated in the underground movers are not limited to those in the above-described embodiment.

In the above-described embodiment, 2.45 GHz magnetrons are adopted as microwave generation sources. The construction and frequency of the microwave generation sources are not limited to those in the above-described embodiment.

Further, while ruling wheels are shown as a underground movement depth adjuster in the above-described embodiment, a structure may be adopted such that height adjustment can be performed, for example, by means of a joint between the pull member 71 and the cultivator 200.

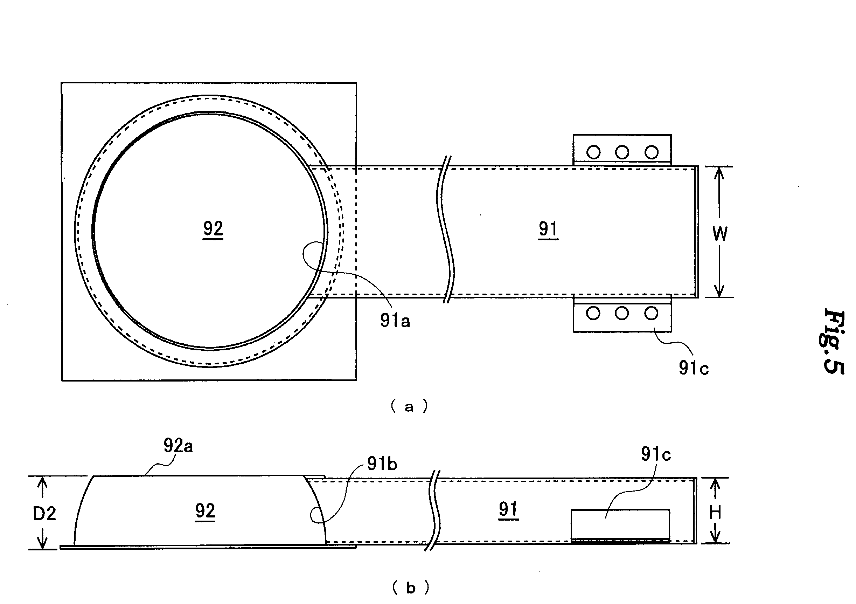

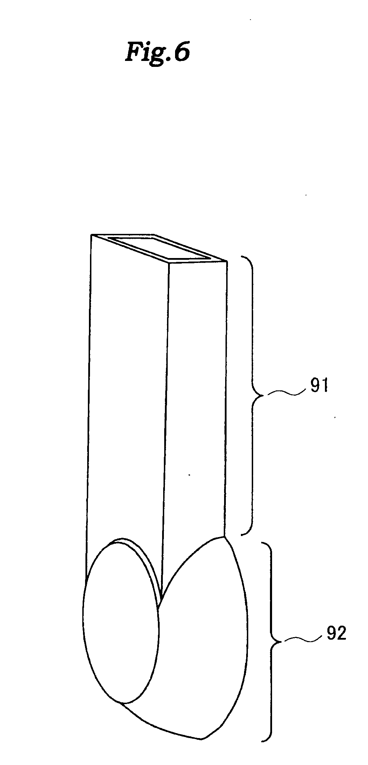

A waveguide with a microwave transmitter suitable for the apparatus of the present invention will be described with reference to Figures 5 and 7. As shown in Figures 5 and 6, this waveguide is constituted by a waveguide 91 in the form of a rectangular tube of a predetermined length having a rectangular sectional shape and a radiator 92 in the form of a circular arm attached to an end of the rectangular-tube waveguide 91 and having a flat bottom. Stainless steel (SUS) is used as the material of the rectangular-tube waveguide 91 and the circular-arm radiator 92. The rectangular-tube waveguide 91 has a rectangular sectional shape having a width W and a height H. The circular-arm radiator 92 has a flat arm-like external shape having a depth D2 and a flat bottom 92a. The diameter of the circular-arm radiator 92 is larger than the width W of the rectangular-tube waveguide 91. Part of the inner periphery of the circular-arm radiator 92 is cut out for connection to the rectangular-tube waveguide 91. The end of the rectangular-tube waveguide 91 is cut so as to have a curvature corresponding to the peripheral side surface of the circular-arm radiator 92 to which the rectangular-tube waveguide 91 is connected. Cut ends 91a and 91b of the rectangular-tube waveguide 91 and circular-arm radiator 92 thus worked preliminarily are fitted and welded to each other. Reference symbol 91c in the figure denotes a bracket for attachment.

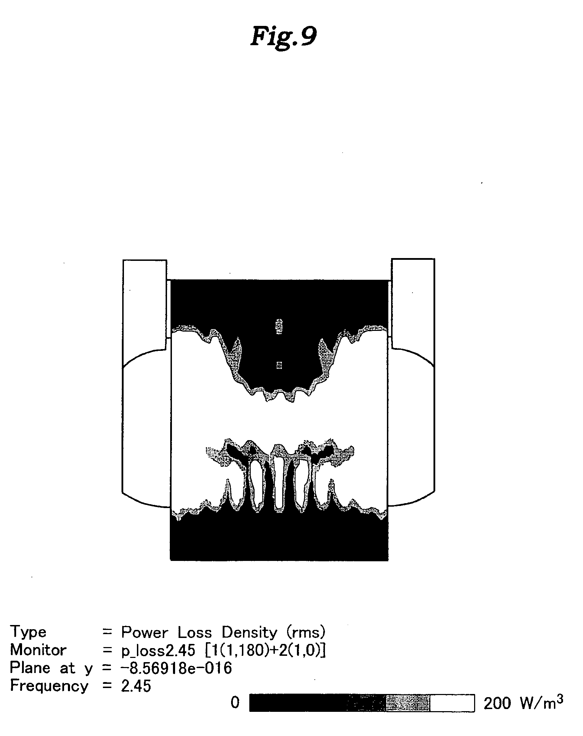

The waveguide with a microwave transmitter obtained in this way is capable of outwardly radiating microwaves propagating along the waveguide while bending the direction of travel through 90° from the end of the waveguide, and capable of efficiently radiating the microwaves into ground by limiting the amount of microwaves returned by being reflected at the end of the waveguide to an extremely small value. Figure 9 shows the results of a computer simulation of a heating energy distribution between the pair of microwave transmitters facing each other. It has been confirmed that, as shown in Figure 9, a high-density heating energy distribution is obtained between the two microwave radiators in the case of using the waveguide with a microwave transmitter having the structure shown in Figures 5 and 6.

Since the height H of the angular-tube waveguide 91 and the depth D2 of the circular-arm radiator 92 are substantially equal to each other, the waveguides and the radiators can be accommodated in a compact form between the left and right side wall plates 25 and 26 constituting the underground movers 21 to 24. Moreover, since the working method for integrally combining the angular-tube waveguide 91 and the circular-arm radiator 92 by welding is adopted, the advantage of improving manufacturability can be ensured, while a hard material (SUS) difficult to bend is used as the material of the waveguide. That is, the angular-tube waveguide itself may be worked by bending with a press to perpendicularly bend its end portion. In such a case, however, it is extremely difficult to work the waveguide. In the above-described example of the radiator portion, the radiator portion and the waveguide portion are welded to each other, while the radiator portion is formed by a press. Since there is no need for bending, a remarkable improvement in manufacturability is achieved.

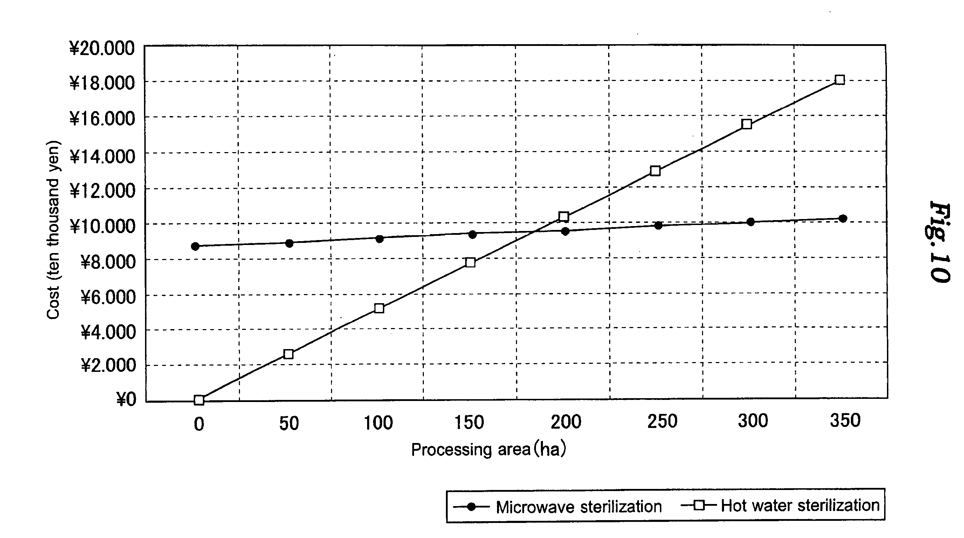

Figure 10 is a graph showing comparison between the microwave soil sterilization method and a hot-water soil sterilization method with respect to economy. From a trial calculation made by the inventors, it has been found that, as is apparent from Figure 10, it is advantageous to adopt the method of the present invention instead of a hot water spraying method in a region where the processing area exceeds 180 hectares.

In a possible situation where root vegetables are grown in a hothouse or the like, it is inconvenient to make a large working machine such as a ride-on type of cultivator travel in a hothouse. In such a situation, if a plant setting position is known, concentrated sterilization for locally sterilizing only the corresponding portion in the depth direction may suffice.

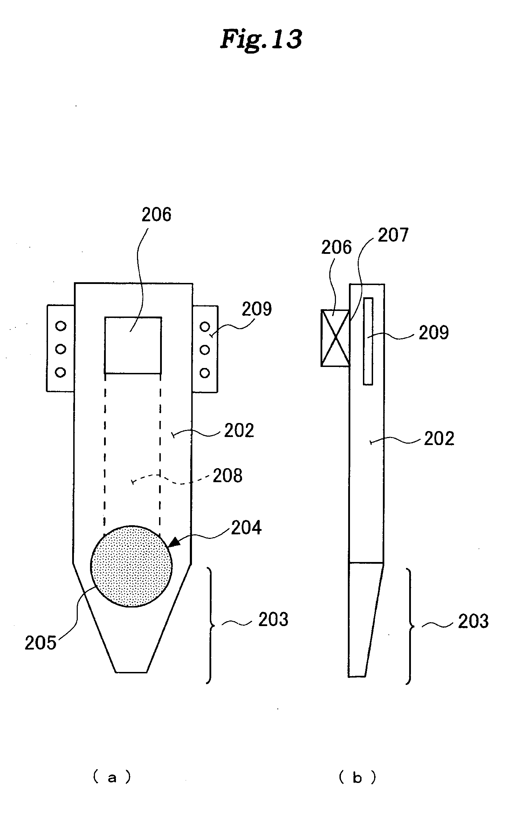

In such a case, there is a need for a farming instrument applied to a soil processing method in which a microwave radiator is made to move into soil generally in a vertical direction and thereafter radiate microwaves to the soil to be processed. Referring to Figure 13, a farming instrument used for such a purpose has a main body 202 made of a metal and capable of being generally vertically thrust into soil. The main body 202 has a sharpened portion 203 for thrusting provided on its fore end portion, a microwave radiation port 204 provided in its side surface and closed by a blank plate 205 made of Teflon, and a microwave inlet 207 provided in its rear end portion to take in microwaves from a microwave generation source 206. A waveguide 208 for guiding microwaves from the microwave inlet 207 to the microwave transmission port 204 is incorporated in the main body 202. In Figure 13, reference numeral 209 denotes a bracket for attachment to a power arm.

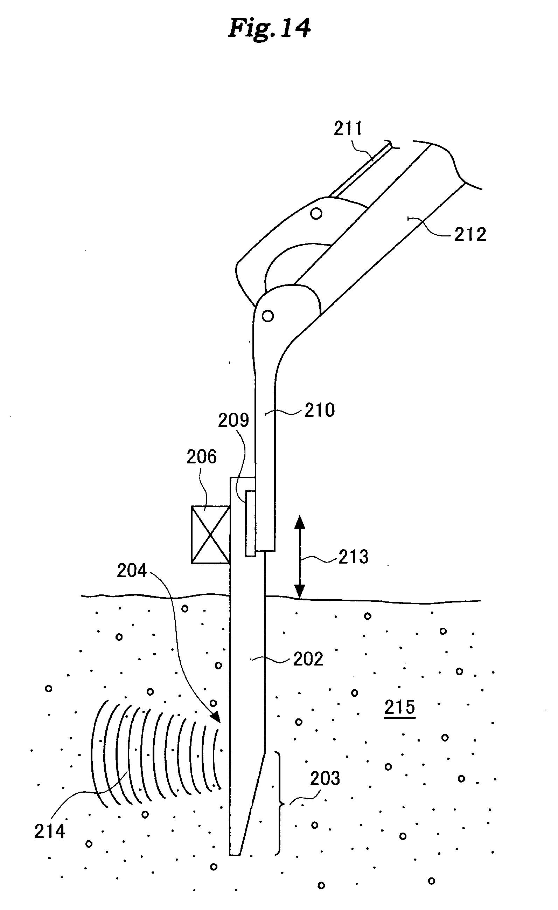

The thus-constructed farming instrument is thrust into a desired spot in a farm by any of various methods including a method in which the instrument is vertically thrust into and drawn out from soil by a small power arm (see Figure 14), a method in which the instrument is vertically thrust into and drawn out of soil by using one of various vertical excavation apparatuses while vibrating the instrument if necessary, and a method in which the instrument is incorporated in a manual working instrument such as shovel or a hoe and made by man power to move into soil. The instrument then radiates microwaves to soil through a predetermined depth. In Figure 14, reference numeral 210 denotes an end arm of a power arm apparatus; reference numeral 211 a drive rod of the small power arm apparatus; reference numeral 212 an intermediate arm of the power arm apparatus; reference numeral 213 arrows indicating a direction in which the main body 202 is thrust into soil 215 and a direction in which the main body 202 is drawn out from soil 215; and reference numeral 214 radiated microwaves.

In the above-described embodiment, the method and apparatus of the present invention are applied to extermination of nematodes harmful to root vegetables in soil. However, other various applications of the method and apparatus of the present invention are possible. For example, the method and apparatus of the present invention can be widely applied to adjustment of the growth of plants, adjustment of germination time, soil remediation, etc., by microwave radiation.

### Industrial Applicability

According to the present invention, as is apparent from the above description, the influence of microwaves on soil in a deep region not easily influenced by microwave radiation to a farm surface can be effectively improved to ensure that various functions useful in agriculture, e.g., the function of adjusting the growth of a plant, the function of adjusting germination time, the function of sterilizing soil and the function of remedying soil can be expected.

## Claims

1. A soil processing method comprising making a microwave radiator move into soil, and thereafter radiating microwaves from the microwave radiator to soil to be processed.

2. The soil processing method according to claim 1, wherein radiation of microwaves is performed while the microwave radiator moved into the soil is being maintained at rest.

3. The soil processing method according to claim 1, wherein radiation of microwaves is performed while the microwave radiator moved into the soil is being moved generally in a vertical direction.

4. The soil processing method according to claim 1, wherein radiation of microwaves is performed while the microwave radiator moved into the soil is being moved generally in a horizontal direction.

5. A soil sterilization method comprising radiating microwaves underground from a microwave radiator moving at a predetermined depth under the ground, whereby soil to be sterilized is sterilized along a locus of travel of the microwave radiator.

6. The soil sterilization method according to claim 5, wherein the direction of radiation of microwaves radiated underground from the microwave radiator is substantially horizontally set, whereby soil to be sterilized is sterilized in a predetermined depth range.

7. The soil sterilization method according to claim 6, wherein the microwave radiator is made to travel underground two times or more along one travel locus at different depths, whereby a continuous mass of soil at a predetermined depth from the soil surface is sterilized with the travel of the microwave radiator.

8. The soil sterilization method according to claim 6 or 7, wherein a plurality of microwave radiators are placed at a suitable distance from each other in a direction perpendicular to the direction of travel, whereby soil to be sterilized is sterilized through a predetermined width along the soil surface with the travel of the microwave radiators.

9. The soil sterilization method according to claim 8, wherein an adjacent pair of microwave radiators in the plurality of microwave radiators are placed so that their radiation surfaces face each other, whereby superimposed electric fields of microwaves are formed between the pair of microwave generators.

10. The soil sterilization method according to any one of claims 5 to 9, wherein a fertilizer comprising a salt is mixed in the soil to be sterilized, before microwave radiation.

11. The soil sterilization method according to any one of claims 5 to 10, wherein sterilization is performed by increasing the temperature of soil to 60 degrees Celsius or higher by induction heating.

12. The soil sterilization method according to any one of claims 5 to 10, wherein the depth of soil to be increased in temperature corresponds to a depth range in which a root vegetable is planted.

13. A soil processing apparatus comprising a farm traveling unit having an underground traveling portion and an overground traveling portion, a microwave radiator incorporated in the underground traveling portion of the farm traveling unit, a microwave generation source held in the overground traveling portion of the farm traveling unit, and a waveguide connecting the microwave generation source held in the overground traveling portion and the microwave radiator held in the underground traveling portion.

14. The soil processing apparatus according to claim 13, wherein the farm traveling unit has a plurality of the underground traveling portions placed at a suitable distance from each other in a direction perpendicular to the direction of travel, and the microwave radiator is incorporated in each underground traveling portion.

15. The soil processing apparatus according to claim 13 or 14, wherein a radiation center axis of the microwave radiator is directed in a substantially horizontal direction in a direction perpendicular to the direction of travel.

16. The soil processing apparatus according to claim 15, wherein the microwave transmitters respectively incorporated in an adj acent pair of the underground traveling portions face each other.

17. The soil processing apparatus according to any one of claims 13 to 16, further comprising a travel depth adjustment tool for adjusting the travel depth of the underground traveling portions.

18. The soil processing apparatus according to any one of claims 9 to 12, further comprising a shielding member for preventing microwaves transmitted from the microwave transmitters incorporated in the underground traveling portions from leaking overground.

19. The soil processing apparatus according to any one of claims 13 to 18, wherein the farm traveling unit is of a pulled type.

20. The soil processing apparatus according to any one of claims 13 to 18, wherein the farm traveling unit is of a self-propelled type.

21. A farming instrument applied to a soil processing method including making a microwave radiator move into soil, and thereafter radiating microwaves from the microwave radiator to the soil to be processed, the farming instrument comprising:
being formed as a structural body capable of being thrust into soil generally in a vertical direction;
a sharpened portion for thrusting provided on a fore end portion;
a microwave radiation port provided in a side surface of the fore end portion;
a microwave inlet provided in a rear end portion; and
a waveguide incorporated to guide microwaves from the microwave inlet to the microwave transmission port,
whereby the farming instrument can be thrust into a desired spot in a farm to radiate microwaves to soil at a predetermined depth.
